# EUROPÄISCHE PATENTSCHRIFT

(11) **EP 3 678 893 B1**
(45) Veröffentlichungstag und Bekanntmachung des Hinweises auf die Patenterteilung: **28.10.2020**
(21) Anmeldenummer: 19709867.6
(22) Anmeldetag: 04.03.2019
(51) Int. Cl.: B60L 53/66, B60L 53/68

(54) **VERFAHREN ZUM RESERVIEREN EINER ELEKTRISCHEN LADESTATION, SOWIE LADESYSTEM**
METHOD FOR RESERVING AN ELECTRIC CHARGING STATION, AND CHARGING SYSTEM
PROCÉDÉ DE RÉSERVATION D'UNE STATION DE CHARGE ÉLECTRIQUE ET SYSTÈME DE CHARGE

(30) Priorität: 15.03.2018 DE 102018203942
(43) Veröffentlichungstag der Anmeldung: 15.07.2020
(73) Patentinhaber: AUDI AG, 85045 Ingolstadt (DE)
(72) Erfinder: IMBERGER, Jörg, 85122 Hitzhofen (DE)
(86) Internationale Anmeldenummer: PCT/EP2019/055307
(87) Internationale Veröffentlichungsnummer: WO 2019/174949

(56) Entgegenhaltungen:
- US-A1- 2015 224 888
- US-B1- 9 171 268

## Beschreibung

Die Erfindung betrifft ein Verfahren zur Nutzung einer elektrischen Ladestation zum Laden eines Elektrofahrzeugs, bei welchem die elektrische Ladestation eines Betreibers für Dritte zur Verfügung gestellt wird, und ein Dritter ein Elektrofahrzeug an der elektrischen Ladestation laden kann, wenn ihm die elektrische Ladestation freigegeben wird.

Aus der Druckschrift DE 10 2008 048 657 A1 ist ein Adapter und ein Verfahren für den Anschluss eines elektrischen Verbrauchers an ein Ladenetzwerk bekannt. Ein Adapter ermöglicht die Teilnahme für elektrische Verbraucher an einem Ladenetz. Der Adapter erlaubt unter anderem den Erwerb von elektrischer Energie über Ladestationen, die dem Käufer der Energie nicht spezifisch zugeordnet sind, also keinen auf ihn zugelassenen Zähler aufweisen. Als Verbraucher kommen hier besonders Elektro- und Hybridfahrzeuge in Betracht, die über einen Stromanschluss von einer Ladestation elektrische Energie beziehen können (Plug-In-Fahrzeug). Das Verfahren dient zum Erfassen und Abrechnen von Transaktionen zwischen einem Ladenetzwerkbetreiber und dem Nutzer eines Verbrauchers.

Aus der Druckschrift DE 10 2015 204 070 B3 ist ein Energieübertragungsverbinder, System und Verfahren bekannt. Dabei wird eine Energieübertragungsverbinder und das entsprechende System zur Übertragung von Energie weiter verbessert, insbesondere hinsichtlich einer Verbindung einer missbräuchlichen oder betrügerischen Nutzung. Hierzu wird vorgeschlagen, dass der Energieübertragungsverbinder ferner eine Positionsbestimmungseinheit zum Bestimmen einer Position des Energieübertragungsverbinders umfasst, wobei a) der Energieübertragungsverbinder zudem einen Empfänger zum Empfangen einer Positionsinformation in Antwort auf die gesendete Identifikationsinformation, eine Speichereinheit, in der Positionsinformationen in zu Identifikationsinformationen zugeordneter Form gespeichert sind, und/oder eine Positionsinformationsleseeinheit zum Lesen von der Identifikationsinformation zugeordneter Positionsinformation von der Energietankstelle, und eine Abgleichseinheit zum Abgleichen der bestimmten Position, der empfangenen, der gespeicherten und/oder der gelesenen Positionsinformationen umfasst, die der Identifikationsinformation zugeordnet ist, und/oder b) die Sendeeinheit auch zum Senden der bestimmten Position an die Abrechnungsstelle ausgestaltet ist.

Aus der Druckschrift DE 10 2010 023 127 A1 ist eine Zugangskontrolle zu elektrischen Ladestationen bekannt. Dieses beinhaltet ein Verfahren zur Zugangs- und Sessionkontrolle von elektrischen Erzeugern und/oder Verbrauchern an allgemein oder an gemeinschaftlich zugänglichen Energietransfereinheiten, wobei eine Authentifizierung und Autorisierung des Erzeugers bzw. des Verbrauchers an der Energietransfereinheit stattfindet und nach erfolgter Authentifizierung und Autorisierung des Erzeugers bzw. des Verbrauchers erzeuger- bzw. verbraucherspezifische Daten durch die Energietransfereinheit an einen Energielieferanten (Energieprovider) weitergeleitet werden. Es erfolgt ein anschließendes Generieren eines Session-Tokens für die Kontrolle des Energietransfers durch den Energielieferanten und Weiterleiten des Session-Tokens an die Energietransfereinheit und den Erzeuger bzw. den Verbraucher, wobei der Session-Token eine zeitlich beschränkte Gültigkeit hat. Ein Transfer von elektrischer Energie zwischen der Energie. während des Energietransfervorgangs in einem definierten Zeitintervall der Session-Token jeweils mindestens einmal von der Energietransfereinheit an den Erzeuger bzw. Verbraucher und vom Erzeuger bzw. Verbraucher an die Energietransfereinheit gesendet wird. Das Verfahren ermöglicht insbesondere eine einfache und nachrüstbare Zugangskontrolle zu frei zugänglichen Steckdosen und öffentlichen Ladestationen, welche zukünftig von Elektrofahrzeugen genutzt werden können. Zusätzlich ermöglicht das Verfahren eine nachrüstbare Zugangskontrolle von dezentralen (privaten und kommerziehen) Energieerzeugern an Smart Grid Netzen. Zum Beispiel können auch Elektrofahrzeuge in Stillzeiten nicht benötigte Batterieleistung einspeisen (Vehicle-to-grid (V2G) Systeme).

Die US 2015/224888 A1 offenbart ein System und ein Verfahren, wobei das System und das Verfahren auf eine Anfrage zugreifen können, um ein Elektrofahrzeug an einer bestimmten Ladestation zu laden.

Die US 9 171 268 B1 offenbart eine Methode, welche einen Zugriff auf Cloud-Dienste über das Internet zum Auffinden und Bereitstellen des Zugriffs auf ein gemeinsam genutztes Fahrzeug eines gemeinsam genutzten Fahrzeugnetzwerks ermöglicht. Ein Verfahren umfasst das Empfangen einer Anforderung von einem Benutzergerät eines Benutzers, ein Fahrzeug zu lokalisieren, das für einen gemeinsamen Zeitraum verwendet werden soll.

Ein Nachteil dieser bekannten Systeme liegt darin, dass die Belegung eingeschränkt ist und die Ladestation insbesondere für einen Nutzer nur bedingt flexibel nutzbar ist.

Die Aufgabe der vorliegenden Erfindung besteht darin, die Nutzung einer elektrischen Ladestation für Dritte variabler zu gestalten.

Diese Aufgabe wird durch ein Verfahren und ein Ladesystem gemäß den unabhängigen Patentansprüchen gelöst. Sinnvolle Weiterbildungen ergeben sich aus den Unteransprüchen.

Ein Aspekt der Erfindung betrifft ein Verfahren zur Nutzung einer elektrischen Ladestation zum Laden eines Elektrofahrzeugs, bei welchem die elektrische Ladestation eines Betreibers für Nutzer, als Dritte zur Verfügung gestellt wird, und ein Dritter ein Elektrofahrzeug an der elektrischen Ladestation laden kann, wenn ihm die elektrischen Ladestation freigegeben wird. Die Ladestation wird durch einen Dritten zu einem Reservierungs-Zeitpunkt für einen Ladevorgang in der Zukunft reserviert, wobei der gewünschte zukünftige Ladevorgang zeitlich um ein Zeitintervall nach dem Reservierungs-Zeitpunkt liegt.

Es ist vorgesehen, dass die Reservierung in einem Zeitfenster vor dem in der Zukunft liegenden Startzeitpunkt des Ladevorgangs bestätigt werden muss. Es ist vorgesehen, dass der Betreiber der Ladestation oder die Ladestation selbst, dann insbesondere automatisch, den Reservierende anfragt, ob er seinen Ladevorgang noch wünscht und/oder den reservierten Startzeitpunkt des Ladevorgangs und/oder die reservierte Gesamtdauer für den Ladevorgang unverändert beibehalten will beziehungsweise einhalten kann. Wird dies nicht bestätigt kann der reservierte Ladevorgang gelöscht werden. Dadurch kann dann auch kurzfristig ein anderer Dritter eine Reservierung vornehmen. Leerzeiten der Ladestation können dadurch vermieden werden. Auch können dadurch nicht wahrgenommene Reservierungen, die nicht aktiv vom Dritten, insbesondere frühzeitig, storniert wurden, vermieden werden.

Für die steigende Anzahl an Elektrofahrzeugen werden immer mehr elektrische Ladestationen benötigt. Um diesen Bedarf abdecken zu können, sollte es möglich sein, dass z.B. Hausbesitzer, Firmen, Geschäfte etc. ihre herkömmlichen Steckdosen oder bereits vorhandenen elektrischen Ladestationen für Dritte freigeben können. Hierzu werden vorzugsweise die Steckdosen mit einem Gerät ausgestattet, welches eine fernbediente Freischaltung dieser Steckdose zulässt. Somit kann beispielsweise ein Hausbesitzer eine Steckdose in der Nähe seines Parkplatzes so modifizieren, dass die Steckdose für eine Dritten benutzbar ist. Es sollte vorzugsweise dem Dritten ermöglicht werden, dass er die elektrische Ladestation nicht Vorort buchen soll, sondern sich die Ladestation reservieren kann. Dies bedeutet, dass ein Nutzer auch wenn er nicht vor Ort an der Ladestation ist, für einen in der Zukunft liegenden Zeitpunkt die Ladestation reservieren kann. Er weiß dann sicher, dass die Ladestation zu diesem Zeitpunkt für seinen Ladevorgang frei ist. Vorausschauend kann somit eine Ladestation durch einen Dritten reserviert werden. Dadurch kann die Nutzung der Ladestation variabler als auch flexibler erfolgen. Die Belegrate der Ladestation kann erhöht werden, da nicht erst vor Ort nachgeprüft werden muss, ob aktuell kein Fahrzeug zum Laden angeschlossen ist, um dann gleich das eigene Fahrzeug zum Laden anzuschließen, sondern sicher geprüft werden kann, ob in der Zukunft zu einem gewünschten Zeitpunkt die Ladestation frei und verfügbar ist und dann ein in der Zukunft liegendes Zeitintervall gebucht werden kann.

Es wäre dann auch möglich, wenn die Person, welche die Reservierung letztlich in Anspruch nimmt, nicht die Person ist, die die Reservierung durchgeführt hat. Beispielsweise kann ein Arbeitskollege für einen Kollegen, welcher mit einem Elektrofahrzeug unterwegs ist, eine Reservierung einer passenden Ladestation durchführen. Dies ist vor allem von Vorteil, wenn die Person die die Ladestation benötigt keinen Möglichkeit besitz eine Reservierung durchzuführen. Selbstverständlich kann der Reservierende jedoch auch gleich derjenige sein, der dann den Ladevorgang eines Elektrofahrzeugs vor Ort an der elektrischen Ladestation in der gebuchten Zukunft auch durchführt.

Eine Reservierung der elektrischen Ladestation erfolgt vorzugsweise zu einem Reservierungs-Zeitpunkt. Dieser Reservierungs-Zeitpunkt liegt um ein Zeitintervall zeitlich vor einem zukünftigen Ladevorgang. Das bedeutet, dass der Reservierungs-Zeitpunkt beispielsweise einige Minuten (z.B. 10, 20 oder 30 Minuten), einige Stunden (z.B. 2, 3, 5, oder 10 Stunden) oder einige Tage (z.B. 2, 7, oder 10 Tage) vorder Nutzung der Ladestation liegt.

Es ist vorzugsweise ebenfalls möglich, die Ladestation direkt vor Ort aber für ein Zeitintervall in der Zukunft reservieren zu können. Hierzu kann die Ladestation eine entsprechende Bedieneinheit aufweisen, welche es einer Person erlaubt die Ladestation für einen beliebigen Zeitpunkt in der Zukunft, wenn diese dann frei ist, zu reservieren. Beispielweise kann eine Person die Ladestation reservieren, wenn der Nutzer weiß, dass die Batterie seines Elektrofahrzeugs beispielsweise in einigen Stunden, beispielsweise in 2 Stunden leer sein wird. Somit kann er die Ladestation für einen Ladevorgang, welcher erst in dieser Zukunft benötigt wird, reservieren. Auch kann beispielswiese eine Reservierung am Morgen für den Abend eines Tages erfolgen, wenn ein Dritter weiß, dass er am Abend ein Aufladen des Fahrzeugs benötigt. Diese Beispiele sind keinesfalls abschließend zu verstehen, sie sollen nur verdeutlichen, welche verschiedene Zeitintervalle es zwischen einem Reservierungs-Zeitpunkt und dem dann in der Zukunft liegenden Ladevorgang gibt. Das Zeitintervall ist also so zu verstehen, dass der Ladevorgang nicht unmittelbar nach der Reservierung erfolgt.

Vorzugsweise wird die Reservierung über ein Online-Portal durchgeführt. Damit eine elektrische Ladestation reserviert werden kann, wird vorzugsweise ein Online-Portal beziehungsweise eine Online-Plattform bereitgestellt und genutzt. Mittels des Online-Portals wird es einem Drittenerlaubt, eine gewünschte Ladestation zu reservieren. Der Nutzer kann sich beispielsweise mit einem Kommunikationsendgerät, wie beispielsweise einem Smartphone, in das Online-Portal einloggen und dann eine Ladestation, welche sich in am gewünschten Ladeort befindet, reservieren. Jeder Betreiber einer elektrischen Ladestation kann sich auf dem Online-Portal präsentieren, sodass die Ladestationen von Dritten reserviert werden können.

Vorzugsweise ist vorgesehen, dass das Reservieren örtlich entfernt zur Ladestation durchgeführt wird. Gerade dann, wenn ein Dritter weiß, dass er zwar nicht aktuell aber in der Zukunft einen Ladevorgang für sein Elektrofahrzeug benötigt und dann auch weiß wo er örtlich sein wird, kann er gezielt nach für Dritte nutzbaren elektrischen Ladestationen suchen und dann bereits die geeignetste reservieren. Ist einem Dritten, der sich aktuelle an einem ersten Ort befindet, beispielsweise bekannt, dass er am Abend an einem zweiten Ort sein wird und er dann aufgrund des Ladezustands auch ein Aufladen seines Elektrofahrzeugs benötigt, kann er bereits jetzt, eine Ladestation an dem zweiten Ort reservieren. So kann beispielswiese bei Dienstreise oder bei Fahrten in den Urlaub oder dergleichen, eine Ladestation am Zielort zu einer Zielzeit reserviert werden. Die Zeitdauer, die dann beispielsweise an dem zweiten Ort für anderweitige Angelegenheiten, beispielsweise auch dem Wahrnehmen von Terminen benötigt wird, kann dann zugleich auch für das Aufladen des Elektrofahrzeugs genutzt werden.

Die Person die die Ladestation reservieren möchte, befindet sich somit zum Reservierungs-Zeitpunkt vorzugsweise noch gar nicht an der elektrischen Ladestation oder möchte auch noch nicht vor Ort sein. Insbesondere kann die Person das Laden noch gar nicht durchführen, da sie beispielsweise auch noch weit entfernt von der elektrischen Ladestation ist oder zeitnah auch nicht dort sein kann oder aktuell ein Laden gar nicht wünscht, sondern erst zu einem späteren Zeitpunkt. Beispielweise kann ein Dritter, eine Ladestation nach seinem Arbeitsende in der Nähe seines Wohnsitzes reservieren. Oder der Ladezustand der Batterie seines Elektrofahrzeugs reicht noch für einen Tag, so kann er für den morgigen Tag eine gewünschte Ladestation reservieren.

Insbesondere kann es vorgesehen sein, dass ein Suchen einer für Dritte nutzbare elektrische Ladestation automatisch durchgeführt wird. Dies kann beispielsweise durch einen Dritten gestartet werden. Ebenso kann auch das Starten der Suche automatisch erfolgen. Beispielsweise kann dies abhängig von einem Fahrzeugparameter des Elektrofahrzeugs, wie einem aktuellen und/oder zukünftig zu erwartenden Ladezustand des Elektrofahrzeugs sein. Zusätzlich oder anstatt dazu kann dies auch abhängig von einem Zielparameter sein. Ein Zielparameter kann beispielsweise die Entfernung zum Zielort des Elektrofahrzeugs und/oder die Zeitdauer bis zum Zielort und/oder die zu erwartende Änderung des Ladezustands während der weiteren Fahrt des Elektrofahrzeugs sein. Diese Zielparameter aber auch andere können beispielsweise aufgrund einer Eingabe in ein Navigationssystem des Elektrofahrzeugs automatisch bestimmt werden.

Dadurch kann durch ein elektronisches System des Elektrofahrzeugs vorausschauend insbesondere auch vollständig selbständig eine für Dritte zur Nutzung freigegebene Ladestation reserviert werden.

Vorzugsweise ist vorgesehen, dass der Preis pro Energieeinheit, die an der Ladestation angeboten wird, abhängig von einem Einflusskriterium geändert wird. Somit kann dynamisch eine Anpassung an geänderte Bedingungen erfolgen.

Dabei kann z.B. der Einfluss nicht selbst vom Betreiber stammen, sondern vom Online-Portal, welches neue Nutzungspreise festlegt oder für das Einloggen Gebühren erhebt.

Vorzugsweise ist vorgesehen, dass der Preis pro Energieeinheit durch den Betreiber individuell geändert werden kann.

Beispielsweise fallen Kosten für Reparaturen der Ladestation an oder für die Inspektion und Überprüfung der Ladestation durch Fachleute. Ebenso können neue Funktionen an der Ladestation installiert werden, die eine einfachere Benutzung der Ladestation ermöglichen.

Vorzugsweise ist vorgesehen, dass als ein Einflusskriterium eine Tageszeit und/oder eine Auslastung der Ladestation mit Reservierungen in der Vergangenheit und/oder in der Zukunft und/oder die Art der Elektrofahrzeuge, die in einem Zeitintervall in der Vergangenheit die Ladestation genutzt haben und/oder in der Zukunft nutzen werden und/oder Zeitdauern von einzelnen Ladevorgängen, für die die Ladestation in der Vergangenheit durch Dritte genutzt wurde und/oder in der Zukunft genutzt werden, definiert wird.

Ein entscheidendes Einflusskriterium ist vorzugsweise die Auslastung der elektrischen Ladestation. Je höher die Auslastung der Ladestation ist, desto mehr Betriebskosten fallen an. Die Auslastung ist ebenfalls von der Tageszeit abhängig. Hier gibt es bestimmte Stoßzeiten, in denen die Auslastung erhöht sein kann. Beispielweise werden die Elektrofahrzeuge vorzugsweise nach Arbeitsende oder in der Nacht geladen. Hier ist auch von Bedeutung, wie viele Personen z.B. dieselbe Ladestation reserviert haben. Ein weiteres Einflusskriterium wird von der Art des Elektrofahrzeugs bestimmt. Je nach Art des Elektrofahrzeugs ist die Ladedauer unterschiedlich. Dabei ist die Kapazität oder der Zustand der Batterie ausschlaggebend, wie lange der Ladevorgang dauert. Je länger der Ladevorgang pro Fahrzeug dauert, desto weniger Fahrzeuge können die Ladestation nutzen. Wenn für eine zukünftige Nutzung der Ladestation in der Zukunft eine hohe Anzahl an Reservierung vorliegt, dann ist dies ein weiteres Einflusskriterium.

Vorzugsweise ist vorgesehen, dass die Menge der bei einem Ladevorgang an der Ladestation von einem Elektrofahrzeug eines Dritten entnommene Energieeinheit und/oder die Zeitdauer eines Ladevorgangs eines Elektrofahrzeugs eines Dritten gemessen wird. Damit der Preis für einen Ladevorgang bestimmt werden kann, sollte vorzugsweise die Menge der entnommenen Energieeinheit während des Ladevorgangs gemessen werden. Anhand der entnommenen Energieeinheit werden dann die Kosten für den Ladevorgang bestimmt.

Ein weiterer Aspekt umfasst die Messung der Zeitdauer eines Ladevorgangs. Dieses dient zur besseren Übersicht der Auslastung und Verfügbarkeit der Ladestation. Durch die aufgenommene Zeitdauer kann bestgelegt werden, wann die Ladestation wieder verfügbar ist. Ebenso lassen sich mit der Zeitdauer Statistiken und Prognosen anstreben, damit die Ladestation optimal genützt werden kann.

Vorzugsweise ist vorgesehen, dass die Informationen über die Menge und/oder Zeitdauer auf ein Online-Portal übertragen werden. Die Informationen können dann von einem Dritten eingesehen werden. Dadurch kann er auch für die Vergangenheit sein Ladeverhalten überprüfen.

Somit können der Betreiber und der Nutzer, der der Dritte ist, einer elektrischen Ladestation die Menge und die Zeitdauer eines Ladevorgangs auch individuell jederzeit einsehen. Die Informationen werden vorzugsweise mittels einer Kommunikationseinheit an der Ladestation an das Online-Portal gesendet. Auf dem Online-Portal werden die Informationen angezeigt und falls es gewünscht ist gespeichert. Somit kann der Betreiber die Auslastung seiner Ladestation, anhand der Menge und der Zeitdauer, ermitteln. Der Nutzer kann sich z.B. einen Beleg seines letzten Ladevorgangs ausdrucken lassen.

Vorzugsweise ist vorgesehen, dass sich der Dritte bei einem zeitlich nach der Reservierung liegenden Eintreffens mit dem Elektrofahrzeug an der Ladestation zum Durchführen des vorher reservierten Ladevorgangs als zur Nutzung der Ladestation berechtigt identifiziert. Diese Identifizierung erfolgt dann vorzugsweise direkt vor Ort, wenn der Dritte mit seinem Elektrofahrzeug direkt vor der Ladestation sich befindet und nach der Identifizierung unmittelbar dann den Ladevorgang starten kann.

Es sollte sichergesellt werden, dass es zu keinem unerlaubten Missbrauch einer Ladestation kommt. Ebenso sollte die Ladestation, die ein Nutzer reserviert hat nicht von einem anderen Nutzer belegt sein. Vorzugsweise sollte die Person, welche eine Reservierung durchführt einen Reservierungsschlüssel erhalten. Dieser Reservierungsschlüssel kann beispielsweise eine Zahlenkombination oder ein Code sein. Der Reservierungsschlüssel ist genau der dazugehörigen Reservierung zugeordnet, also genaue Benutzungszeit des Ladevorgangs und Lage der Ladestation. Somit kann der Nutzer mit dem Reservierungsschlüssel die Ladestation freigeben. Es wäre auch denkbar, dass die Freischaltung der Ladestation mit einer Smartphone-App realisiert wird.

Es kann auch eine Warteliste für eine Reservierung der elektrischen Ladestation erstellt werden. Ist beispielsweise eine Reservierung durch einen ersten Dritten bereits erfolgt und nachfolgend wird von zumindest einem weiteren Dritten eine Reservierung zu diesem Zeitintervall in der Zukunft der bereits bestehenden Reservierung gewünscht, kann diese schon bestehende Reservierung dem weiteren Dritten mitgeteilt werden. Insbesondere kann dem weiteren Dritten durch das elektronische System der Ladestation dann angeboten werden, ob er auf eine Warteliste gesetzt werden möchte. Wird dies gewünscht, kann der weitere Dritte informiert werden, wenn der erste Dritte seine Reservierung storniert hat oder durch den Betreiber storniert wurde. Auch dadurch kann eine effiziente Nutzung der elektrischen Ladestation für Dritte erfolgen.

Ein weiterer Aspekt der Erfindung betrifft ein Ladesystem zum elektrischen Laden eines Elektrofahrzeugs, welches zumindest eine elektrische Ladestation eines Betreibers aufweist, wobei die Ladestation zur Nutzung für Dritte ausgebildet ist, und mit einer Reservierungsfunktion, mit welcher ein Dritter die Ladestation zu einem um ein Zeitintervall zeitlich vor einem in der Zukunft liegenden Ladevorgang reservieren kann.

Um die Fahrzeugbatterie eines Elektrofahrzeuges aufladen zu können, benötigt man vorzugsweise ein Ladesystem, welches in der Lage ist die Batterie aufzuladen. Das Ladesystem sollte mit mindestens einer Ladestation (z.B. herkömmliche 230 V Steckdose oder eine Wallbox) aufweisen. Die Ladestation kann von jedem Betreiber (Unternehmen oder ein einfacher Hausbesitzer) zur Verfügung gestellt werden. Die Ladestation ist vorzugsweise so konzipiert, dass sie von Dritten genutzt werden kann. Die Ladestation kann beispielsweise auch mit einem Gerät ausgestattet sein, welches die Ladestation sperren kann und nur von einem berechtigten Nutzer benutzt werden kann. Hierzu weist sie ein optionales Identifizierungssystem auf, wo der Nutzer die Ladestation für einen Ladevorgang freigeben kann.

Die Ladestation ist vorzugsweise mit einer Reservierungsfunktion ausgebildet. Mit der Reservierungsfunktion sind insbesondere die zum Verfahren genannten Ausführungen durchführbar.

Mit der Reservierungsfunktion ist eine Reservierung der Ladestation möglich, wobei sich der Zeitpunkt des Ladevorgangs zeitlich um ein Zeitintervall nach einem Reservierungs-Zeitpunkt liegt. Dabei kann ein Nutzer die Ladestation mittels eines Online-Portals zu einem gewünschten Zeitpunkt reservieren.

Die Ladestation weist vorzugsweise eine Bedienoberfläche mit einem Identifizierungssystem auf. Hier kann sich der Nutzer der reservierten Ladestation identifizieren und dadurch die Ladestation freigeben und somit den Ladevorgang starten. Ebenfalls sollte die Ladestation mit einer Messeinheit zum Erfassen der Menge der aufgenommen Energieeinheit und der Zeitdauer des Ladevorgangs ausgebildet sein. Mit diesen Messdaten können im Anschluss des Ladevorgangs die Kosten für den Ladevorgangs bestimmt werden. Die Messdaten werden optionale an das Online-Portal übermittelt, damit der Betreiber und der Nutzer der Ladestation Einblick in Menge und Dauer des Ladevorgangs erhalten.

Die Erfindung weist auch die Kombinationen der beschriebenen Ausführungsformen auf.

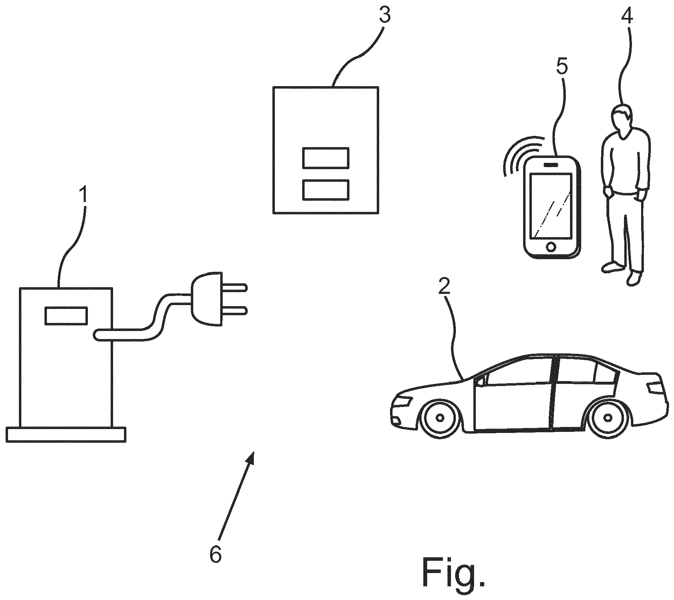

Weitere Vorteile, Merkmale und Einzelheiten der Erfindung ergeben sich aus der nachfolgenden Beschreibung bevorzugter Ausführungsformen, sowie anhand der Zeichnung.

Im Folgenden ist ein Ausführungsbeispiel der Erfindung beschrieben. Dabei zeigt die einzige Fig. einen schematischen Ablauf einer Ausführungsform des erfindungsgemäßen Verfahrens.

Bei dem im Folgenden erläuterten Ausführungsbeispiel handelt es sich um eine bevorzugte Ausführungsform der Erfindung. Des Weiteren ist die beschriebene Ausführungsform auch durch weitere der bereits beschriebenen Merkmale der Erfindung ergänzbar.

Insgesamt zeigt die Fig. ein beispielhaftes Verfahren zur Nutzung einer elektrischen Ladestation 1 eines Ladesystems 6 zum Laden eines Elektrofahrzeugs 2, bei welchem die elektrische Ladestation 1 eines Betreibers für Dritte zur Verfügung gestellt wird, und ein Dritter ein Elektrofahrzeug 2 an der elektrischen Ladestation 1 laden kann, wenn ihm die elektrische Ladestation 1 freigegeben wird. Die elektrische Ladestation 1 kann durch einen Dritten zu einem Reservierungs-Zeitpunkt für einen Ladevorgang in der Zukunft reserviert wird, wobei der gewünschte zukünftige Ladevorgang zeitlich um ein größeres Zeitintervall nach dem Reservierungs-Zeitpunkt liegt. Der Reservierungs-Zeitpunkt liegt z.B. einige Stunden oder auch Tage vor dem Nutzungszeitpunkt der elektrischen Ladestation 1. Die elektrische Ladestation 1 sollte vorzugsweise mit einem Identifizierungssystem für Dritte ausgebildet sein, damit ein definiert gesteuerter Zugang zu der elektrischen Ladestation 1 gewährleistet wird. Zum Reservierungs-Zeitpunkt befindet sich der Dritte mit seinem Elektrofahrzeug 2 nicht an der elektrischen Ladestation 1 sondern örtlich, gegebenenfalls auch weiter, entfernt. Insbesondere kann sich der Dritte auch in einem zum Ort der elektrischen Ladestation 1 unterschiedlichen Ort befinden, so dass es ihm zum Reservierungs-Zeitpunkt noch gar nicht möglich wäre, unverzüglich an der elektrischen Ladestation 1 sein zu können.

Die Reservierung der elektrischen Ladestation 1 erfolgt vorzugsweise über ein Online-Portal 3. Der Betreiber einer elektrischen Ladestation 1 hat die Möglichkeit seine elektrische Ladestation 1 über ein Online-Portal für Dritte zugänglich zu machen. Beispielsweise kann ein Nutzer 4, der einen Dritten darstellt, sich mittels eines Smartphones 5 im Online-Portal 3 registrieren und die elektrische Ladestation 1 reservieren. Dabei bekommt der Nutzer 4 einen Reservierungsschlüssel, mit dem er sich an der elektrischen Ladestation 1 identifizieren kann, um die elektrische Ladestation 1 für ihn somit freizugeben. Beispielsweise kann der Reservierungsschlüssel ein Code sein, welcher am Identifizierungssystem eingeben werden kann, um die elektrische Ladestation 1 freizugeben. Eine weitere vorstellbare Variante wäre die Identifikation mittels einer Smartphone-App auf dem Smartphone 5. Hier könnte z.B. durch eine Nahfunkkommunikation zwischen der elektrischen Ladestation 1 und dem Smartphone 5 eine Freigabe gewährt werden.

Das elektrische Ladesystem 6 sollte vorzugsweise mit zwei Messeinheiten ausgebildet sein, mit diesen einmal die Menge der Energieeinheit und die Zeitdauer des Ladevorgangs gemessen wird. Es kann jedoch auch nur eine Messeinheit vorhanden sein. Mit diesen Messdaten können die Kosten für einen Ladevorgang bestimmt werden und die Auslastung und Verfügbarkeit der elektrischen Ladestation 1 dokumentiert werden. Die Messdaten sollten vorzugsweise an das Online-Portal 3 übertragen werden, damit der Betreiber und der Nutzer 4 der elektrischen Ladestation 1 Einblick auf die Daten haben. Damit hat der Nutzer 4 eine Übersicht auf seine getätigten Ladevorgänge und der Betreiber kann die Auslastung seiner elektrischen Ladestation 1 überwachen.

Bei der elektrischen Ladestation 1 kann es sich typischerweise um eine Wallbox oder eine herkömmliche 230 V Steckdose handeln. Somit kann ein Betreiber seine Steckdose beispielsweise in der Nähe seines Parkplatzes für Dritte zu Verfügung stellen. Dadurch wird der Hausbesitzer zum Betreiber einer elektrischen Ladestation 1. Diese kann er dann über ein Online-Portal 3 für Dritte zu Verfügung stellen. Die Steckdose wird dann beispielsweise mit einem Gerät versehen, damit diese verschließbar ist und nicht willkürlich benutzt werden kann. Dies kann z.B. mit einem Identifizierungssystem erfolgen. In dem Gerät ist die Messeinheit zur Aufnahme der aufgenommen Energiemenge und die Zeitdauer des Ladevorgangs integriert. Des Weiteren sollte überprüft werden, welche Energieabgabe die Steckdose zulässt. Die Leistungsfähigkeit hat ebenfalls einen Einfluss auf die Zeitdauer des Ladevorgangs eines Elektrofahrzeugs 2. Je leistungsstärker die Steckdose, also das Ladesystem 6 ist, desto schneller kann die Batterie des Elektrofahrzeugs 2 geladen werden.

## Patentansprüche

1. Verfahren zur Nutzung einer elektrischen Ladestation (1) zum Laden eines Elektrofahrzeugs (2), bei welchem die elektrische Ladestation (1) eines Betreibers für Nutzer (4) als Dritte zur Verfügung gestellt wird, und ein Dritter ein Elektrofahrzeug (2) an der elektrischen Ladestation (1) laden kann, wenn ihm die elektrische Ladestation (1) freigegeben wird, wobei
die elektrische Ladestation (1) durch einen Dritten zu einem Reservierungs-Zeitpunkt für einen Ladevorgang in der Zukunft reserviert wird, wobei der gewünschte zukünftige Ladevorgang zeitlich um ein Zeitintervall nach dem Reservierungs-Zeitpunkt liegt, wobei eine Reservierung in einem Zeitfenster vor dem in der Zukunft liegenden Startzeitpunkt des Ladevorgangs bestätigt werden muss, **dadurch gekennzeichnet, dass** dazu die elektrische Ladestation (1) selbst automatisch den Reservierenden anfragt, ob er seinen Ladevorgang noch wünscht und/oder den reservierten Startzeitpunkt des Ladevorgangs und/oder die reservierte Gesamtdauer für den Ladevorgang unverändert beibehalten will, wobei der reservierte Ladevorgang gelöscht wird, wenn die Anfrage nicht bestätigt wird.

2. Verfahren nach Anspruch 1,
**dadurch gekennzeichnet, dass**
mit dem Löschen eine kurzfristige Reservierung durch einen anderen Dritten bereitgestellt wird.

3. Verfahren nach Anspruch 1 oder 2,
**dadurch gekennzeichnet, dass**
eine Warteliste für eine Reservierung der elektrischen Ladestation (1) erstellt wird.

4. Verfahren nach Anspruch 3,
**dadurch gekennzeichnet, dass**
eine Reservierung durch einen ersten Dritten bereits erfolgt ist und wird nachfolgend von zumindest einem weiteren Dritten eine Reservierung zu diesem Zeitintervall in der Zukunft der bereits bestehenden Reservierung gewünscht, kann diese schon bestehende Reservierung dem weiteren Dritten mitgeteilt werden.

5. Verfahren nach Anspruch 4,
**dadurch gekennzeichnet, dass**
dem weiteren Dritten durch das elektronische System der elektrischen Ladestation (1) dann angeboten wird, ob er auf die Warteliste gesetzt werden möchte.

6. Verfahren nach Anspruch 5,
**dadurch gekennzeichnet, dass**
der weitere Dritte informiert wird, wenn der erste Dritte seine Reservierung storniert hat oder durch den Betreiber storniert wurde.

7. Verfahren nach einem der vorhergehenden Ansprüche,
**dadurch gekennzeichnet, dass**
das Reservieren über ein Online-Portal (3) durchgeführt wird, und/oder das Reservieren örtlich entfernt zur elektrischen Ladestation (1) durchgeführt wird.

8. Verfahren nach einem der vorhergehenden Ansprüche,
**dadurch gekennzeichnet, dass**
der Preis pro Energieeinheit, die an der elektrischen Ladestation (1) angeboten wird, abhängig von einem Einflusskriterium, insbesondere durch ein Online-Portal (3), geändert wird, insbesondere als ein Einflusskriterium eine Tageszeit und/oder eine Auslastung der elektrischen Ladestation (1) mit Reservierungen in der Vergangenheit und/oder in der Zukunft und/oder die Art der Elektrofahrzeuge (2), die in einem Zeitintervall in der Vergangenheit die elektrischen Ladestation (1) genutzt haben und/oder in der Zukunft nutzen werden und/oder Zeitdauern von einzelnen Ladevorgängen, für die die elektrische Ladestation (1) in der Vergangenheit durch Dritte genutzt wurde und/oder in der Zukunft genutzt werden, vorgegeben wird.

9. Verfahren nach einem der vorhergehenden Ansprüche,
**dadurch gekennzeichnet, dass**
die Menge der bei einem Ladevorgang an der elektrischen Ladestation (1) von einem Elektrofahrzeug (2) eines Dritten entnommenen Energieeinheiten und/oder die Zeitdauer eines Ladevorgangs eines Elektrofahrzeugs (2) eines Dritten gemessen wird, und die Information über die Menge und/oder Zeitdauer durch eine Kommunikationseinheit der elektrischen Ladestation (1) auf ein Online-Portal (3) übertragen werden, insbesondere können die Informationen dann von einem Dritten eingesehen werden, wobei insbesondere ein Nutzer einen Beleg seines letzten Ladevorgangs sich ausdrucken lassen kann.

10. Ladesystem (6) zum elektrischen Laden eines Elektrofahrzeugs (2), welches zumindest eine elektrische Ladestation (1) eines Betreibers aufweist, wobei die elektrische Ladestation (1) zur Nutzung für Nutzer (4), als Dritte ausgebildet ist, und mit einer Reservierungsfunktion, mit welcher ein Dritter die elektrische Ladestation (1) zu einem um ein Zeitintervall zeitlich vor einem in der Zukunft liegenden Ladevorgang reservieren kann, wobei eine Reservierung in einem Zeitfenster vor dem in der Zukunft liegenden Startzeitpunkt des Ladevorgangs bestätigt werden muss, **gekennzeichnet dadurch, dass** dazu die elektrische Ladestation (1) selbst automatisch den Reservierenden anfragt, ob er seinen Ladevorgang noch wünscht und/oder den reservierten Startzeitpunkt des Ladevorgangs und/oder die reservierte Gesamtdauer für den Ladevorgang unverändert beibehalten will, wobei der reservierte Ladevorgang gelöscht wird, wenn die Anfrage nicht bestätigt wird.

## Claims

1. Method for using an electric charging station (1) for charging an electric vehicle (2), in which the electric charging station (1) of an operator is made available for users (4) as third persons, and a third person is able to charge an electric vehicle (2) at the electric charging station (1) if the electric charging station (1) is enabled for him, wherein
the electric charging station (1) is reserved by a third person at a reservation point in time for a charging procedure in the future, wherein the desired future charging procedure lies temporally after the reservation point in time by a time interval,
wherein a reservation needs to be confirmed in a time window prior to the start point in time, in the future, of the charging procedure, **characterised in that**
to this end the electric charging station (1) itself automatically asks the person reserving, whether he still wants his charging procedure and/or wishes to retain the reserved start point in time of the charging procedure and/or the reserved total duration for the charging procedure without alteration, wherein the reserved charging procedure is deleted if the request is not confirmed.

2. Method according to claim 1,
**characterised in that**
with the deletion a short-term reservation on the part of another third person is made available.

3. Method according to claim 1 or 2,
**characterised in that**
a waiting list is generated for a reservation of the electric charging station (1).

4. Method according to claim 3,
**characterised in that**
if a reservation on the part of a first third person has already taken place and subsequently a reservation is desired by at least one further third person at this time interval in the future from the already existing reservation, this already existing reservation can be communicated to the further third person.

5. Method according to claim 4,
**characterised in that**
an offer is made to the further third person on the part of the electronic system of the electric charging station (1), of whether he wishes to be set on the waiting list.

6. Method according to claim 5,
**characterised in that**
the further third person is informed if the first person has cancelled his reservation or was cancelled by the operator.

7. Method according to any of the preceding claims,
**characterised in that**
the reservation is carried out via an online portal (3), and/or the reservation is carried out geographically distanced from the electric charging station (1).

8. Method according to any of the preceding claims,
**characterised in that**
the price per energy unit which is offered at the electric charging station (1) is altered depending on an influence criterion, in particular by an online portal (3), in particular as an influence criterion is predetermined a time of day and/or an occupancy rate of the electric charging station (1) with reservations in the past and/or in the future and/or the type of electric vehicles (2) which have used the electric charging station (1) in a time interval in the past and/or will use it in the future and/or time durations of individual charging procedures, for which the electric charging station (1) was used by third persons in the past and/or will be used in the future.

9. Method according to any of the preceding claims,
**characterised in that**
the quantity of the energy units removed in a charging procedure at the electric charging station (1) by an electric vehicle (2) of the third person and/or the time duration of a charging procedure of an electric vehicle (2) of the third person is measured, and the information regarding the quantity and/or time duration are transferred via a communication unit of the electric charging station (1) to an online portal (3), in particular, the items of information can then be viewed by a third person, wherein in particular a user can get a printout of a receipt of his last charging procedure.

10. Charging system (6) for the electric charging of an electric vehicle (2), which has at least one electric charging station (1) of an operator, wherein the electric charging station (1) is designed for use for users (4) as third persons, and having a reservation function with which a third person can reserve the electric charging station (1) at a lying by a time interval temporally prior to a charging procedure in the future, wherein a reservation must be confirmed in a time window prior to the start point in time of the charging procedure which is in the future,
**characterised in that**
to this end the electric charging station (1) itself automatically asks the reserving person whether he still wants his charging procedure and/or wishes to retain the reserved start point in time of the charging procedure and/or the reserved total duration for the charging procedure without alteration, wherein the reserved charging procedure is deleted if the request is not confirmed.

## Revendications

1. Procédé d'utilisation d'une station de recharge électrique (1) pour la recharge d'un véhicule électrique (2), dans laquelle la station de recharge électrique (1) d'un exploitant est mise à la disposition pour des utilisateurs (4) en tant que tiers, et un tiers peut recharger un véhicule électrique (2) sur la station de recharge électrique (1) lorsque la station de recharge électrique (1) est libérée pour lui, dans lequel
à un moment de réservation pour une opération de recharge dans le futur, dans lequel l'opération de recharge future souhaitée est retardée d'un intervalle de temps après le moment de réservation,
dans lequel
une réservation doit être confirmée dans une fenêtre temporelle avant l'heure de début se trouvant dans le futur de l'opération de recharge, **caractérisé en ce que**
pour ce faire, la station de recharge électrique (1) demande automatiquement à la personne qui réserve si elle souhaite encore son opération de recharge et/ou si elle souhaite maintenir inchangée l'heure de début réservée de l'opération de recharge et/ou la durée totale réservée pour l'opération de recharge, dans lequel l'opération de recharge réservée est supprimée si la demande n'est pas confirmée.

2. Procédé selon la revendication 1,
**caractérisé en ce qu'**
avec la suppression, une réservation à court terme est rendue disponible par un autre tiers.

3. Procédé selon la revendication 1 ou 2,
**caractérisé en ce qu'**
une liste d'attente pour une réservation de la station de recharge électrique (1) est créée.

4. Procédé selon la revendication 3,
**caractérisé en ce qu'**
une réservation effectuée par un premier tiers a déjà été effectuée et si une réservation est par la suite souhaitée à cet intervalle de temps dans le futur de la réservation existante par au moins un autre tiers, cette réservation déjà existante peut être communiquée à l'autre tiers.

5. Procédé selon la revendication 4,
**caractérisé en ce que**
l'autre tiers se voit alors proposer par le système électronique de la station de recharge électrique (1) d'être placé sur la liste d'attente.

6. Procédé selon la revendication 5,
**caractérisé en ce que**
l'autre tiers est informé si le premier tiers a annulé sa réservation ou a été annulé par l'exploitant.

7. Procédé selon l'une quelconque des revendications précédentes,
**caractérisé en ce que**
la réservation est effectuée via un portail en ligne (3) et/ou la réservation est effectuée de manière espacée localement par rapport à la station de recharge électrique (1).

8. Procédé selon l'une quelconque des revendications précédentes, **caractérisé en ce que**
le prix par unité d'énergie qui est proposé à la station de recharge électrique (1) est modifié en fonction d'un critère d'influence, en particulier par un portail en ligne (3), en particulier, un moment de la journée et/ou une utilisation de la station de recharge électrique (1) avec des réservations dans le passé et/ou dans le futur et/ou le type de véhicules électriques (2), qui ont utilisé la station de recharge électrique (1) dans un intervalle de temps dans le passé et/ou qui l'utiliseront dans le futur et/ou les durées des opérations de recharge individuelles pour lesquelles la station de recharge électrique (1) a été utilisée par des tiers dans le passé et/ou sera utilisée dans le futur sont prédéterminées comme critère d'influence.

9. Procédé selon l'une quelconque des revendications précédentes,
**caractérisé en ce que**
la quantité d'unités d'énergie prélevées sur le véhicule électrique d'un tiers (2) pendant une opération de recharge à la station de recharge électrique (1) et/ou la durée d'une opération de recharge d'un véhicule électrique (2) d'un tiers est mesurée, et l'information sur la quantité et/ou la durée sont transmises par une unité de communication de la station de recharge électrique (1) sur un portail en ligne (3), les informations peuvent en particulier être ensuite consultées par un tiers, dans lequel en particulier un utilisateur peut faire imprimer un reçu de sa dernière opération de recharge.

10. Système de recharge (6) pour la recharge électrique d'un véhicule électrique (2), lequel présente au moins une station de recharge électrique (1) d'un exploitant, dans lequel la station de recharge électrique (1) est réalisée pour une utilisation pour des utilisateurs (4) en tant que tiers, et avec une fonction de réservation avec laquelle un tiers peut réserver la station de recharge électrique (1) à un intervalle de temps avant une opération de recharge dans le futur, dans lequel une réservation doit être confirmée dans une fenêtre de temps avant l'heure de début de l'opération de recharge se trouvant dans le futur,
**caractérisé en ce que**
pour ce faire, la station de recharge électrique (1) demande automatiquement à la personne qui réserve si elle souhaite encore son opération de recharge et/ou si elle souhaite maintenir inchangée l'heure de début réservée de l'opération de recharge et/ou la durée totale réservée pour l'opération de recharge, dans lequel l'opération de recharge réservée est supprimée si la demande n'est pas confirmée.
